# EUROPEAN PATENT SPECIFICATION

(11) **EP 3 539 866 B1**
(45) Date of publication and mention of the grant of the patent: **26.04.2023**
(21) Application number: 19163472.4
(22) Date of filing: 18.03.2019
(51) Int. Cl.: B64C 11/30, B64D 35/04, B64D 35/06, B64C 11/48, B64D 27/10, B64D 27/00

(54) **COUNTER-ROTATING PROPELLER SYSTEM WITH CAPABILITY TO STOP ROTATION OF ONE ROW**
GEGENLÄUFIG DREHENDES PROPELLERSYSTEM MIT DER MÖGLICHKEIT, DIE DREHUNG EINER REIHE ZU STOPPEN
SYSTÈME D'HÉLICES À CONTRE-ROTATION AVEC UNE CAPACITÉ D'ARRÊTER LA ROTATION D'UNE RANGÉE

(30) Priority: 16.03.2018 US 201815924030
(43) Date of publication of application: 18.09.2019
(73) Proprietor: Hamilton Sundstrand Corporation, Charlotte, NC 28217-4578 (US)
(72) Inventor: HENZE, Chad M., Granby, CT Connecticut 06035 (US)
(74) Representative: Dehns

(56) References cited:
- EP-A1- 2 907 747
- EP-A1- 3 495 260
- US-A- 2 312 624
- US-A- 4 642 029
- US-A1- 2012 000 177
- US-A1- 2015 078 888
- US-A1- 2015 104 309
- US-A1- 2015 225 053
- US-A1- 2017 313 430
- US-A1- 2017 313 430

## Description

### BACKGROUND

This application relates to counter-rotating propeller systems, such as for use on aircraft where one of the rows can be selectively stopped from rotating and its blades utilized as guide vanes during lower power operation.

Propeller systems are known and often utilized to provide propulsion to aircraft. One known type of propeller system has two co-axial sets of rotating blades rotating with separate hubs. In many cases, the two sets of blades rotate in opposite directions. These are called counter-rotating propeller systems.

It is also known to provide guide vanes either upstream or downstream of a propeller, which may have a variable angle of incidence, such as to redirect flow upstream or capture swirl downstream of the propeller blades. In at least one known system, there are dedicated guide vanes positioned downstream of the rotor and blades. US 2312624 A relates to an aircraft power plant utilizing two coaxial propellers rotatable in opposite directions and having means for increasing the aerodynamic efficiency of one of a pair of coaxial controllable-pitch aeronautical propellers driven by individual power plants in the event the other propeller of the pair should cease to rotate because of power plant failure or for other reasons. EP 2 907 747 A1 and US 2015/078888 A1 relate to counter-rotating propeller systems.

### SUMMARY

A propeller system is disclosed in accordance with claim 1. The propeller system has a pair of rotors and a pair of blade sets and at least one drive input to drive a first of the rotors and blade sets and a second of the rotors and blade sets. The blade sets are positioned such that when both are driven, air will be driven across the first blade set and then across the second blade set. There is a pitch change mechanism to change an angle of incidence of the blade in at least one of the first and second blade sets. There is a device for selectively stopping rotation of the at least one of the first or second rotor and blade set while still allowing rotation of the other rotor and blade set. The pitch change mechanism of said at least one of said first and second blade sets still allows change of said angle of incidence when said device has stopped rotation. A control selectively changes the angle of incidence of said one of said first and second blade sets and also selectively controls said device, while said at least one of said first and second blade sets has its rotation stopped. The selective change includes changing the angle of incidence as flight conditions of an associated aircraft change, and at least one of the two following changes occur:
a) when said second rotor and second blade set are stopped from rotating, said second blade set acts as guide vanes positioned to turn a swirling flow of air from said first blade set generally in an axial direction, to convert energy from the swirling flow into thrust; and
b) when said first rotor and first blade set is stopped from rotating, said second blade set being positioned to swirl incoming flow such that flow exiting the second blade set is more pre-dominantly in an axial direction, thus generating more thrust.

The control causes said at least one of said first and second blade sets to be driven when at higher power operation of the associated aircraft, and stopping rotation of said one of said first and second blade sets at lower power operation of said aircraft. Higher power operation includes a take-off condition for the associated aircraft. Lower power operation includes a cruise condition of the associated aircraft.

A corresponding method of operating a propeller system is also disclosed in accordance with claim 4.

These and other features may be best understood from the following drawings and specification.

### BRIEF DESCRIPTION OF THE DRAWINGS

Figure 1 schematically shows a propeller system.
Figure 2 schematically shows a blade angle.
Figure 3 schematically shows a first drive arrangement.
Figure 4 schematically shows another alternative drive.

### DETAILED DESCRIPTION

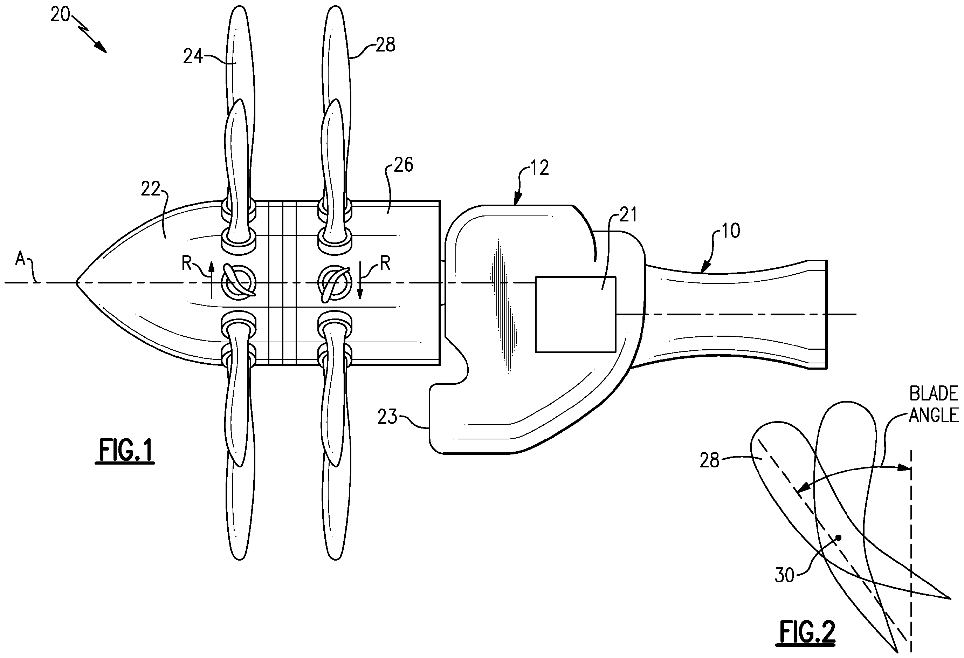

Figure 1 shows a propeller system 20. An engine, such as a turbine engine 21, is illustrated schematically and drives hubs 22 and 26. An inlet 23 provides air to the turbine engine 21. Other drives could be utilized. A first set of blades 24 rotates in one direction with a forward hub portion 22. A second set of blades 28 rotates in the opposite direction with a hub portion 26.

Air is driven by blades 24 and then across blades 28 which drive additional air flow.

Figure 2 schematically shows a feature of the blades 28 and, namely, that an angle of incidence or pitch angle of the blades can change about a pivot axis 30. In one embodiment, the same is true of the blades 24. In yet another embodiment blades 24 have a pitch change, but blades 28 do not.

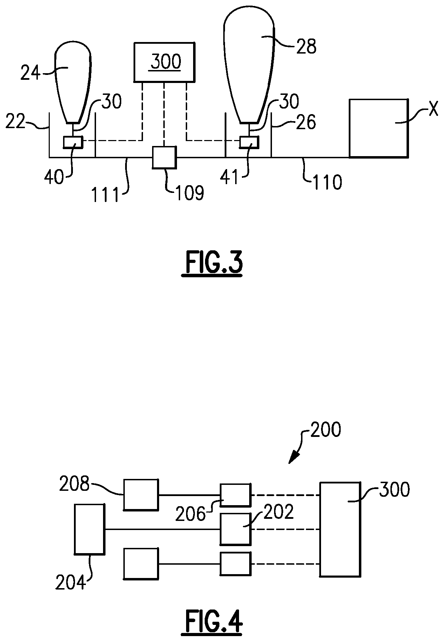

Figure 3 shows further schematic details of one system. A pitch change mechanism 40 allows the blades 24 to pivot about the axis 30.

A pitch change mechanism 41 can change the pitch angle of the blades 28 about their respective axis 30.

Pitch change mechanisms are known, and mechanisms 40/41 may be known.

The pitch change of propeller systems in normal operation serves two functions. One is to allow for efficient conversion of power into thrust over a range of operating conditions including varying forward speeds by properly aligning the propeller blades with the incoming flow.

The second is to allow the propeller system to control its speed of rotation.

Figure 3 shows a drive input X driving a shaft portion 110 to, in turn, drive a shaft portion 111 through a clutch 109.

The clutch 109 is shown as being controlled by a control 300. The control 300 further controls the pitch change mechanisms 40 and 41.

Now, at lower power operation, the control 300 may open the clutch 109 stopping rotation of the hub 22 and blades 24. The angle of the blades 24 can still be changed by pitch change mechanism 40, such that the now stopped blades 24 can provide the function of guide vanes, as described below. Thus, the guide vane function is provided without the requirement of having a separate guide vane row. The use of such guide vanes becomes particularly valuable at lower power operation, and when it is not necessary to have both blade sets 24 and 28 to provide sufficient propulsion. The lower power operation could be cruise of the associated aircraft, and the higher power operation could be take-off of the associated aircraft.

Allowing the stopped blade row to change pitch is intended to allow the blades to operate efficiently as guide vanes over a range of operating conditions including varying flight speeds. In the case where the guide vanes are aft of the rotating row, the vanes turn the swirling flow from the propeller in the axial direction converting some of the wasted energy in the swirling flow into thrust. Similarly, in the situation where the guide vanes are in front of the rotating blade row, the flow is swirled coming into the rotating row such that the flow exiting the rotating row is more predominantly in the axial direction, and thus generating more thrust, than it would have done without the guide vanes. A skilled worker in this art would recognize when a particular angle is desirable.

In another embodiment, a clutch could be positioned to stop the rotation of the hub 26 and blades 28 which would then serve as guide vanes for the flow exiting the rotating front blade set 24. Figure 4 shows yet another embodiment, which is shown schematically. Here, embodiment 200 has a first drive 202 for driving one hub 204. A second separate drive 206 drives the second hub 208. Both drives 202 and 206 are controlled by control 300. In this embodiment, the control 300 may stop the drive 202 or 206, as appropriate, to stop rotation of the particular hub 204 or 208. This embodiment would operate as those described above.

As can be appreciated, any number of mechanisms can be employed to stop drive of one of the blade sets. Those disclosed here are examples.

Although embodiments have been disclosed, a worker of ordinary skill in this art would recognize that certain modifications would come within the scope of the appended claims. For that reason, the following claims should be studied to determine the true scope and content of this disclosure.

## Claims

1. A propeller system comprising:
a pair of rotors and a pair of blade sets (24, 28) and at least one drive input to drive a first of said rotors and blade sets and a second of said rotors and blade sets;
said blade sets (24, 28) being positioned such that when both are driven, air will be driven across said first blade set (24), and then across said second blade set (28);
there being a pitch change mechanism (40, 41) to change an angle of incidence in at least one of said first and second blade sets (24, 28), and there being a device for selectively stopping rotation of said at least one of said first and second blade sets (24, 28) while still allowing rotation of the other of said first and second blade sets (24, 28); and
said pitch change mechanism (40, 41) of said at least one of said first and second blade sets (24, 28) still allowing change of said angle of incidence when said device has stopped rotation;
wherein a control (300) selectively changes the angle of incidence of said one of said first and second blade sets (24, 28) and also selectively controls said device, while said at least one of said first and second blade sets has its rotation stopped;
said selective change includes changing the angle of incidence as flight conditions of an associated aircraft change, and one of the two following changes occur;
a) when said second rotor and second blade set (28) are stopped from rotating, said second blade set acts as guide vanes positioned to turn a swirling flow of air from said first blade set (24) generally in an axial direction, to convert energy from the swirling flow into thrust; and
b) when said first rotor and first blade set (24) is stopped from rotating, said second blade set (28) being positioned to swirl incoming flow such that flow exiting the second blade set is more pre-dominantly in an axial direction, thus generating more thrust;
said control (300) causing said at least one of said first and second blade sets (24, 28) to be driven when at higher power operation of the associated aircraft, and stopping rotation of said one of said first and second blade sets (24, 28) at lower power operation of said aircraft;
wherein said higher power operation includes a take-off condition for the associated aircraft; and
wherein said lower power operation includes a cruise condition of the associated aircraft.

2. The propeller system as set forth in claim 1, wherein said at least one drive input is a single drive input.

3. The propeller system as set forth in claim 1 or 2, wherein said device is a clutch (109) for stopping rotation of said one of said first and second blade sets (24, 28).

4. A method of operating a propeller system mounted on an aircraft comprising the steps of:
(a) providing a pair of rotors and a pair of blade sets and driving a first of said rotors and blade sets and a second of said rotors and blade sets; and
(b) stopping rotation of one of said first and second blade sets, while still rotating a second of said first and second blade sets, and changing an angle of incidence of said one of said first and second blade sets while it is stopped from rotating;
wherein a control selectively changes the angle of incidence of said one of said first and second blade sets and also selectively controls a device to stop rotation of said at least one of said first and second blade sets, while said at least one of said first and second blade sets has its rotation stopped;
said selective change includes changing the angle of incidence as flight conditions of an associated aircraft change, and one of the two following changes occur;
c) when said second rotor and second blade set are stopped from rotating, said second blade set acts as guide vanes positioned to turn a swirling flow of air from said first blade set generally in an axial direction, to convert energy from the swirling flow into thrust; and
d) when said first rotor and first blade set is stopped from rotating, said second blade set being positioned to swirl incoming flow such that flow exiting the second blade set is more pre-dominantly in an axial direction, thus generating more thrust;
said control causing said at least one of said first and second blade sets to be driven when at higher power operation of the associated aircraft, and stopping rotation of said one of said first and second blade sets at lower power operation of said aircraft;
wherein said higher power operation includes a take-off condition for the associated aircraft; and
wherein said lower power operation includes a cruise condition of the associated aircraft.

5. The method as set forth in claim 4, wherein a clutch is opened for stopping rotation of said one of said first and second blade sets.

6. The method as set forth in any of claims 4 or 5, wherein said drive to said first and second rotors and blade sets is provided by two separate drive inputs, and a control stopping drive input from a respective one of said two drive inputs.

## Patentansprüche

1. Propellersystem, umfassend:
ein Paar Rotoren und ein Paar Schaufelsätze (24, 28) und mindestens einen Antriebseingang zum Antreiben eines ersten der Rotoren und Schaufelsätze und eines zweiten der Rotoren und Schaufelsätze;
wobei die Schaufelsätze (24, 28) derart positioniert sind, dass beim Antrieb beider Luft über den ersten Schaufelsatz (24) und danach über den zweiten Schaufelsatz (28) geleitet wird;
wobei ein Anstellwinkeländerungsmechanismus (40, 41) vorhanden ist, um einen Einfallswinkel in mindestens einem des ersten und des zweiten Schaufelsatzes (24, 28) zu ändern, und wobei eine Vorrichtung zum selektiven Stoppen der Drehung des mindestens einen von dem ersten und dem zweiten Schaufelsatz (24, 28) vorhanden ist, während die Drehung des anderen des ersten und des zweiten Schaufelsatzes (24, 28) noch immer möglich ist; und
wobei der Anstellwinkeländerungsmechanismus (40, 41) des mindestens einen des ersten und des zweiten Schaufelsatzes (24, 28) immer noch eine Änderung des Einfallswinkels ermöglicht, wenn die Vorrichtung die Drehung gestoppt hat;
wobei eine Steuerung (300) selektiv den Einfallswinkel des einen des ersten und des zweiten Schaufelsatzes (24, 28) ändert und auch selektiv die Vorrichtung steuert, während die Drehung des mindestens einen des ersten und des zweiten Schaufelsatzes gestoppt hat;
die selektive Änderung das Ändern des Einfallswinkels beinhaltet, wenn sich die Flugzustände eines zugeordneten Luftfahrzeugs ändern und eine der zwei folgenden Änderungen auftritt;
a) wenn die Drehung des zweiten Rotors und des zweiten Schaufelsatzes (28) gestoppt wurde, wirkt der zweite Schaufelsatz als Leitschaufeln, die positioniert sind, um einen wirbelnden Luftstrom von dem ersten Schaufelsatz (24) im Allgemeinen in einer axialen Richtung zu drehen, um Energie von dem wirbelnden Strom in Schub umzuwandeln; und
b) wenn die Drehung des ersten Rotors und des ersten Schaufelsatzes (24) gestoppt wurde, wobei der zweite Schaufelsatz (28) positioniert ist, um den eingehende Strom derart zu verwirbeln, dass der aus dem zweiten Schaufelsatz austretende Strom eher vorherrschend in einer axialen Richtung ist, wodurch mehr Schub erzeugt wird;
wobei die Steuerung (300) bewirkt, dass der mindestens eine des ersten und des zweiten Schaufelsatzes (24, 28) bei höherem Leistungsbetrieb des zugeordneten Luftfahrzeugs angetrieben wird, und die Drehung des einen des ersten und des zweiten Schaufelsatzes (24, 28) bei geringerem Leistungsbetrieb des Luftfahrzeugs stoppt;
wobei der höhere Leistungsbetrieb einen Startzustand für das zugeordnete Luftfahrzeug beinhaltet; und
wobei der geringere Leistungsbetrieb einen Reiseflugzustand des zugehörigen Luftfahrzeugs beinhaltet.

2. Propellersystem nach Anspruch 1, wobei der mindestens eine Antriebseingang ein einzelner Antriebseingang ist.

3. Propellersystem nach Anspruch 1 oder 2, wobei die Vorrichtung eine Kupplung (109) zum Stoppen der Drehung des einen des ersten und des zweiten Schaufelsatzes (24, 28) ist.

4. Verfahren zum Betreiben eines Propellersystems, das an ein Luftfahrzeug montiert ist und die folgenden Schritte umfasst:
(a) Bereitstellen eines Paars Rotoren und eines Paars Schaufelsätze und Antreiben eines ersten der Rotoren und Schaufelsätze und eines zweiten der Rotoren und Schaufelsätze; und
(b) Stoppen der Drehung eines des ersten und des zweiten Schaufelsatzes, während sich ein zweiter des ersten und des zweiten Schaufelsatzes noch dreht, und Ändern eines Einfallswinkels des einen des ersten und des zweiten Schaufelsatzes, während seine Drehung gestoppt ist;
wobei eine Steuerung selektiv den Einfallswinkel des einen des ersten und des zweiten Schaufelsatzes ändert und auch selektiv eine Vorrichtung steuert, um die Drehung des mindestens einen des ersten und des zweiten Schaufelsatzes zu stoppen, während die Drehung des mindestens einen des ersten und des zweiten Schaufelsatzes gestoppt wurde;
die selektive Änderung das Ändern des Einfallswinkels beinhaltet, wenn sich die Flugzustände eines zugeordneten Luftfahrzeugs ändern und eine der beiden folgenden Änderungen auftritt;
c) wenn die Drehung des zweiten Rotors und des zweiten Schaufelsatzes gestoppt wurde, wirkt der zweite Schaufelsatz als Leitschaufeln, die positioniert sind, um einen wirbelnden Luftstrom von dem ersten Schaufelsatz im Allgemeinen in einer axialen Richtung zu drehen, um Energie von dem wirbelnden Strom in Schub umzuwandeln; und
d) wenn die Drehung des ersten Rotors und des ersten Schaufelsatzes gestoppt wurde, wobei der zweite Schaufelsatz positioniert ist, um den eingehende Strom derart zu verwirbeln, dass der aus dem zweiten Schaufelsatz austretende Strom eher vorherrschend in einer axialen Richtung ist, wodurch mehr Schub erzeugt wird;
wobei die Steuerung bewirkt, dass der mindestens eine des ersten und des zweiten Schaufelsatzes bei höherem Leistungsbetrieb des zugeordneten Luftfahrzeugs angetrieben wird, und die Drehung des einen des ersten und des zweiten Schaufelsatzes bei geringerem Leistungsbetrieb des Luftfahrzeugs stoppt;
wobei der höhere Leistungsbetrieb einen Startzustand für das zugeordnete Luftfahrzeug beinhaltet; und
wobei der geringere Leistungsbetrieb einen Reiseflugzustand des zugehörigen Luftfahrzeugs beinhaltet.

5. Verfahren nach Anspruch 4, wobei eine Kupplung geöffnet wird, um die Drehung des einen des ersten und des zweiten Schaufelsatzes zu stoppen.

6. Verfahren nach einem der Ansprüche 4 oder 5, wobei der Antrieb zum ersten und zum zweiten Rotor und Schaufelsatz durch zwei separate Antriebseingänge bereitgestellt ist und eine Steuerung den Antriebseingang von einem jeweiligen der zwei Antriebseingänge stoppt.

## Revendications

1. Système d'hélices comprenant :
une paire de rotors et une paire d'ensembles de pales (24, 28) et au moins une entrée d'entraînement pour entraîner un premier desdits rotors et ensembles de pales et un second desdits rotors et ensembles de pales ;
lesdits ensembles de pales (24, 28) étant positionnés de sorte que lorsque les deux sont entraînés, de l'air sera entraîné à travers ledit premier ensemble de pales (24), puis à travers ledit second ensemble de pales (28) ;
il y a un mécanisme de changement de pas (40, 41) pour changer un angle d'incidence dans au moins l'un desdits premier et second ensembles de pales (24, 28), et il y a un dispositif pour arrêter sélectivement la rotation dudit au moins un desdits premier et second ensembles de pales (24, 28) tout en permettant toujours la rotation de l'autre desdits premier et second ensembles de pales (24, 28) ; et
ledit mécanisme de changement de pas (40, 41) dudit au moins un desdits premier et second ensembles de pales (24, 28) permettant toujours un changement dudit angle d'incidence lorsque ledit dispositif a arrêté la rotation ;
dans lequel une commande (300) change sélectivement l'angle d'incidence dudit un desdits premier et second ensembles de pales (24, 28) et commande également sélectivement ledit dispositif, tandis que ledit au moins un desdits premier et second ensembles de pales a sa rotation arrêtée ;
ledit changement sélectif comporte le changement de l'angle d'incidence lorsque les conditions de vol d'un aéronef associé changent, et l'un des deux changements suivants se produit ;
a) lorsque ledit second rotor et ledit second ensemble de pales (28) sont arrêtés de tourner, ledit second ensemble de pales agit comme des aubes directrices positionnées pour faire tourner un flux d'air tourbillonnant provenant dudit premier ensemble de pales (24) généralement dans une direction axiale, pour convertir l'énergie du flux tourbillonnant en poussée ; et
b) lorsque ledit premier rotor et ledit premier ensemble de pales (24) sont arrêtés de tourner, ledit second ensemble de pales (28) étant positionné pour faire tourbillonner le flux entrant de sorte que le flux sortant du second ensemble de pales soit plus prédominant dans une direction axiale, générant ainsi plus de poussée ;
ladite commande (300) provoquant l'entraînement dudit au moins un desdits premier et second ensembles de pales (24, 28) lors d'un fonctionnement à puissance plus élevée de l'aéronef associé, et arrêtant la rotation dudit un desdits premier et second ensembles de pales (24, 28) à un fonctionnement à plus faible puissance dudit aéronef ;
dans lequel ledit fonctionnement à puissance plus élevée comporte une condition de décollage pour l'aéronef associé ; et dans lequel ledit fonctionnement à plus faible puissance comporte une condition de croisière de l'aéronef associé.

2. Système d'hélices selon la revendication 1, dans lequel ladite au moins une entrée d'entraînement est une entrée d'entraînement unique.

3. Système d'hélices selon la revendication 1 ou 2, dans lequel ledit dispositif est un embrayage (109) pour arrêter la rotation dudit un desdits premier et second ensembles de pales (24, 28).

4. Procédé de fonctionnement d'un système d'hélices monté sur un aéronef comprenant les étapes de :
(a) fourniture d'une paire de rotors et d'une paire d'ensembles de pales et l'entraînement d'un premier desdits rotors et ensembles de pales et d'un second desdits rotors et ensembles de pales ; et
(b) l'arrêt de la rotation de l'un desdits premier et second ensembles de pales, tout en faisant encore tourner un second desdits premier et second ensembles de pales, et le changement d'un angle d'incidence dudit un desdits premier et second ensembles de pales pendant qu'il est arrêté de tourner ;
dans lequel une commande change sélectivement l'angle d'incidence dudit un desdits premier et second ensembles de pales et commande également sélectivement un dispositif pour arrêter la rotation dudit au moins un desdits premier et second ensembles de pales, tandis que ledit au moins un desdits premier et second ensembles de pales a sa rotation arrêtée ;
ledit changement sélectif comporte le changement de l'angle d'incidence lorsque les conditions de vol d'un aéronef associé changent, et l'un des deux changements suivants se produit ;
c) lorsque ledit second rotor et ledit second ensemble de pales sont arrêtés de tourner, ledit second ensemble de pales agit comme des aubes directrices positionnées pour faire tourner un flux d'air tourbillonnant provenant dudit premier ensemble de pales généralement dans une direction axiale, pour convertir l'énergie du flux tourbillonnant en poussée ; et
d) lorsque ledit premier rotor et ledit premier ensemble de pales sont arrêtés de tourner, ledit second ensemble de pales étant positionné pour faire tourbillonner le flux entrant de sorte que le flux sortant du second ensemble de pales soit plus prédominant dans une direction axiale, générant ainsi plus de poussée ;
ladite commande provoquant l'entraînement dudit au moins un desdits premier et second ensembles de pales lors d'un fonctionnement à puissance plus élevée de l'aéronef associé, et arrêtant la rotation dudit un desdits premier et second ensembles de pales à un fonctionnement à plus faible puissance dudit aéronef ;
dans lequel ledit fonctionnement à puissance plus élevée comporte une condition de décollage pour l'aéronef associé ; et dans lequel ledit fonctionnement à plus faible puissance comporte une condition de croisière de l'aéronef associé.

5. Procédé selon la revendication 4, dans lequel un embrayage est ouvert pour arrêter la rotation dudit un desdits premier et second ensembles de pales.

6. Procédé selon l'une quelconque des revendications 4 ou 5, dans lequel ledit entraînement desdits premier et second rotors et ensembles de pales est fourni par deux entrées d'entraînement séparées, et une commande arrête une entrée d'entraînement provenant de l'une respective desdites deux entrées d'entraînement.
